# EUROPEAN PATENT APPLICATION

(11) **EP 3 734 929 A1**
(43) Date of publication of application: **04.11.2020**
(21) Application number: 19171502.8
(22) Date of filing: 29.04.2019
(51) Int. Cl.: H04L 29/06

(54) **METHOD FOR AUTHENTICATING A BONDING PROCEDURE**

(71) Applicant: WIDEX A/S, 3540 Lynge (DK)
(72) Inventor: Maretti, Niels Erik, DK-3540 Lynge (DK)

(57) **Abstract**

A method for authenticating a bonding procedure according to a short-range radio communication protocol between a wireless computing device and a hearing assistive device comprises steps of initiating a paring session for the short-range radio communication protocol by bringing the wireless computing device and the hearing assistive device into pairing mode, arranging the hearing assistive device in a predefined position relatively to the wireless computing device, establishing an acoustic signaling link between the wireless computing device and the hearing assistive device for exchanging secret elements as an out-of-band step of the pairing session, and calculating and storing a link key unique for the bonding of the wireless computing device and the hearing assistive device by using the exchanged secret elements.

## Description

The present invention relates authenticating a bonding procedure according to a short-range radio communication protocol between a wireless computing device and a hearing assistive device. Also, the invention relates to a hearing assistive system comprising a hearing assistive device and a wireless computing device employing the method.

Services offered over short-range radio links, such as Bluetooth, may expose private data or allow a connecting device to control the short-range radio device. For Bluetooth, there is from a security perspective a need to recognize specific devices, and thus enable control over devices permitted to connect to a given Bluetooth device. From a usability perspective, it is desired that Bluetooth enabled devices may establish a connection without user intervention when the devices are in range.

To achieve this, the Bluetooth standard specifies a process called bonding. Two devices become bonded through a process called pairing. The pairing process may be triggered by a specific request from a user to bond to another device (by requesting *"Add a Bluetooth device*")*.* This is called dedicated bonding.

The pairing procedure often involves some level of user interaction, such as confirming the identity of the devices. A bond is formed between the two devices upon successful pairing. This bond enables the two devices to re-connect to each other later without having to repeat the pairing process and the confirming device identities.

During a pairing procedure, two devices establish a relationship by creating a shared secret known as a link key. When paired or bonded, both devices store the same link key if the devices stay paired or bonded. If required, an un-bonding procedure exists for removing the link key and thereby the bonding relationship. The un-bonding procedure can be performed in any of the two bonded devices. A device may have a predetermined maximum number of link keys and thereby bonding relationships.

Once bonding has been established, an authenticated Asynchronous Connection-Less (ACL) link between the devices can be encrypted to protect exchanged data against eavesdropping. A device that wants to communicate privately with a bonded device may cryptographically authenticate the identity of the bonded device.

Secure Simple Pairing (SSP) has been specified for Bluetooth v2.1 and is based upon public key cryptography. For example, headsets and hearing devices have very limited Input/ Output (IO) capabilities. Even though a device may prompt the user to confirm the pairing process, Secure Simple Pairing has virtually no authentication mechanism, and does not provide so-called man-in-the-middle (MITM) protection.

The man-in-the-middle (MITM) attack occurs when a user wants to connect two Bluetooth devices. Instead of connecting directly with each other, the two Bluetooth devices unknowingly connect to a third (hostile) Bluetooth device that plays the role of the device they are attempting to pair with. The third Bluetooth device then relays information between the two Bluetooth devices giving the illusion that they are directly connected.

Out of band (OOB) techniques exists. These may employ near-field communication (NFC) or acoustic signaling for exchanging some information used in the pairing process. Pairing is completed using the Bluetooth radios, but requires information from the near-field communication. This provides only the level of man-in-the-middle protection that is present in the near-field communication set-up.

Unauthorized access to a hearing aid may compromise data security. In the coming years, Bluetooth will be the default wireless protocol for connecting hearing aids to remote devices, such as remote controls (smartphones), audio streaming sources and fitting equipment. For some hearing aids it is necessary to use a gateway device for translating between Bluetooth and a proprietary Magnetic Induction radio. Due to the limited User Interface of a hearing aid, the device may enter pairing mode caused by user interactions potentially having a different purpose, e.g. switching on the hearing aid. This makes the hearing aid potentially volatile to man-in-the-middle attacks.

The purpose of the invention is to integrate an authentication step into the pairing procedure for a wireless computing device and a hearing assistive device with limited IO capabilities to establish a relationship for short-range radio communication.

This purpose is according to the invention achieved by a method as defined in claim 1, a hearing assistive system as defined in claim 8, and a wireless computing device as defined in claim 17. Preferred embodiments are defined in the dependents claims.

The invention will be described in further detail with reference to preferred aspects and the accompanying drawing, in which:
fig. 1 shows a hearing assistive device and a wireless computing device according to one embodiment of the invention;
fig. 2 shows a hearing assistive device and a wireless computing device according to one embodiment of the invention;
fig. 3 illustrates one embodiment of a hearing assistive device according to the invention;
fig. 4 shows schematically the communication links between components in an embodiment of a hearing system according to the invention;
fig. 5 shows schematically a wireless computing device for use in a hearing system according to the invention;
fig. 6 illustrates the pairing process for a short-range communication protocol based upon exchanging secrets via an acoustic signaling link;
fig. 7 illustrates one authenticated bonding procedure according to the invention; and
fig. 8 illustrates an alternative procedure for authenticated bonding according to the invention.

### DETAILED DESCRIPTION

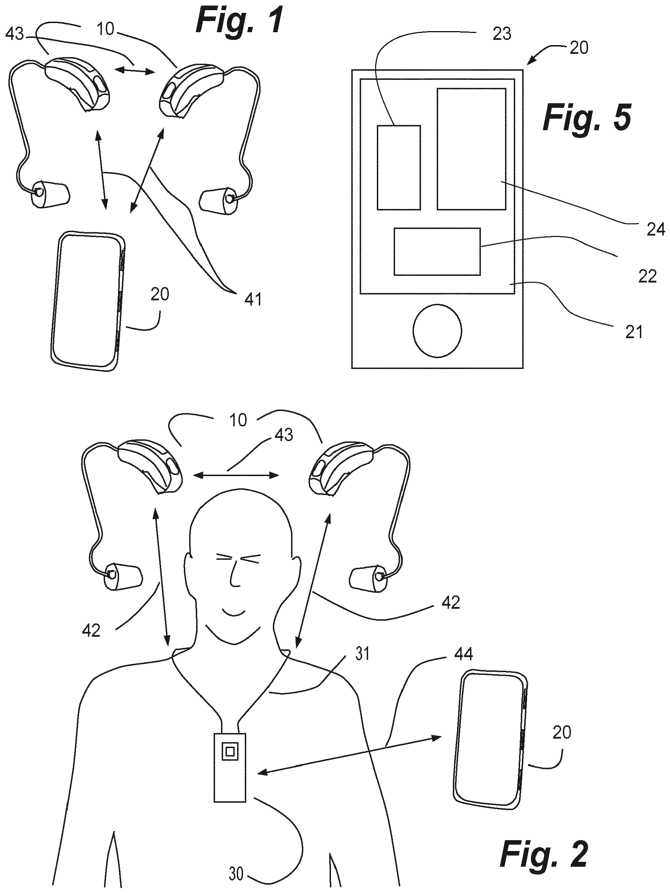

A hearing assistive system is according to one embodiment of the invention is shown in fig. 1. The hearing assistive system includes a hearing assistive device 10 comprises a Behind-The-Ear (BTE) housing component adapted for placement behind the ear and being connected via a wire to an earpiece component. The major part of the electronics, including some microphones, a processor, a battery and preferably a short-range radio, e.g. Bluetooth, and an inductive radio, is located inside of the housing component. Two hearing assistive devices 10 in a set of binaural hearing aids may communicate via a communication link 43. In some embodiments, the communication link 43 is based upon a proprietary magnetic induction radio protocol. The hearing assistive system furthermore includes a wireless computing device 20 adapted for wireless communication with the hearing assistive device 10 via a short-range communication link 41. In some embodiments, the wireless computing device 20 is a so-called smartphone. In some embodiments, the short-range communication link 41 is based on the Bluetooth specification.

Reference is made to fig. 2, showing one further embodiment of a hearing system according to the invention. The hearing system according to the illustrated embodiment includes a set of hearing assistive devices 10, a wireless computing device 20, and a body worn gateway device 30. The two hearing assistive devices 10 are adapted for communicating via a communication link 43 by means of magnetic induction radios.

The body worn gateway device 30 is a network node equipped for interfacing between an magnetic induction radio of the hearing assistive devices 10 (also used for inter-ear communication) and a Bluetooth radio present in the wireless computing device 20. The body worn gateway device 30 relays a signal received from a hearing assistive device 10 via a communication link 42 as a signal transmitted via a short-range communication link 44 towards the wireless computing device 20, and the opposite way.

The wireless computing device 20 has application software for controlling the operation of the hearing assistive devices 10. The body worn gateway device 30 includes a neck strap 31 containing a conducting and radiating loop element proximately to the hearing assistive devices 10.

### The acoustic transceiver

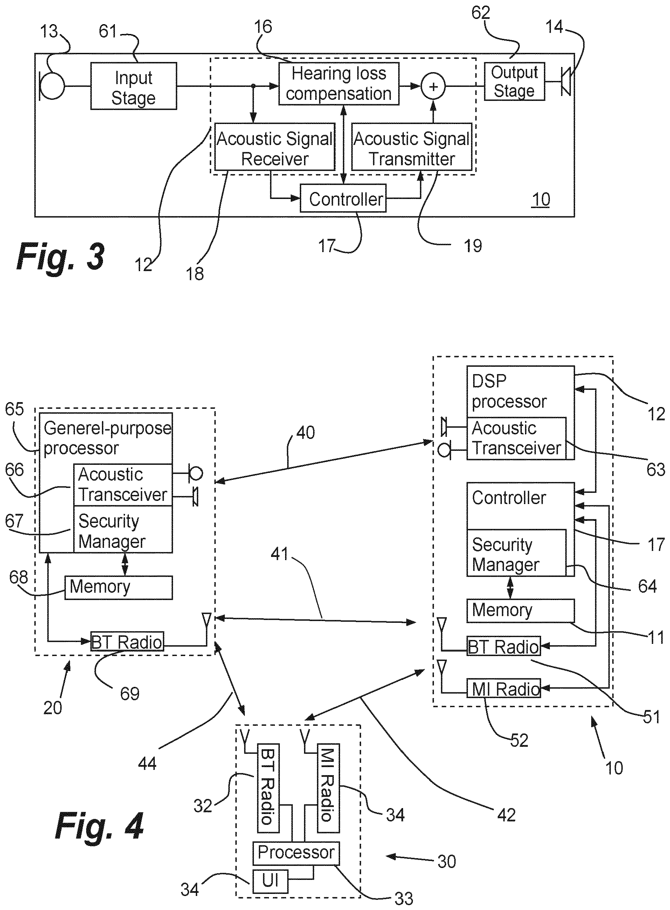

Fig. 3 illustrates one embodiment of a hearing assistive device 10 according to the invention. The hearing assistive device 10 comprises an acoustic signal receiver 18 and an acoustic signal transmitter 19. A microphone 13 picks up an acoustic signal fed to a processor 12 via an input stage 61 as a digital input signal. In some embodiments, the input stage 61 includes an analog-to-digital converter, e.g. a delta-sigma-converter, converting the signal picked up into a digital representation.

The processor 12 comprises a digital signal processing path 16 for alleviating a hearing loss by amplifying sound at frequencies in those parts of the audible frequency range where the user suffers a hearing deficit. From the digital signal processing path 16, a signal is branched to the acoustic signal receiver 18.

In one embodiment, the acoustic signal with instructions is frequency modulated by means of Frequency-Shift Keying (FSK) which is a frequency modulation scheme in which digital information is transmitted through discrete frequency changes of a carrier signal in the upper part of the audible acoustic spectrum, e.g. above 8 or 10 kHz.

At the input of the acoustic signal receiver 18, a band-pass filter removes noise present outside the frequency band of the acoustic signal. By means of a mixer, the FSK signal is down converted to baseband, where the down converted signal is demodulated by using a conventional matched filter approach for detecting the frequency the incoming signal, and the data content is detected, and error corrected.

Hereafter data content is supplied to a controller 17 translating the data received from the acoustic signal receiver 18 into commands to perform predetermined actions or into instructions to store transmitted data in specified memory locations of the hearing assistive device 10.

When the controller 17 identifies a need for sending a message to the wireless computing device 20, an acoustic signal transmitter 19 is instructed to prepare data for transmission. The data is modulated according to the used acoustic communication protocol and is added to data in the digital signal processing path 16 in a summation point, and thereafter converted to sound by means of the output stage 62 and the speaker 14.

In some embodiments, the hearing assistive device 10 includes an acoustic signal receiver 18 as well as an acoustic signal transmitter 19, and is adapted for two-way acoustic communication, while the acoustic signal transmitter 19 is omitted in other embodiments, whereby the acoustic communication does only support one-way communication; the hearing assistive device 10 may only listening.

In one embodiment of the invention shown in fig. 4, an acoustic transceiver 63 is integrated (hardcoded) in the processor 12. In one embodiment, the processor 12 is a dedicated DSP processor unit. An acoustic transceiver 66 of the wireless computing device 20 comprises substantially the same building blocks. In some embodiments, the acoustic transceiver 66 is embodied as software code in a general-purpose processor 65 present in e.g. a smartphone.

The acoustic signal receiver 18 and the acoustic signal transmitter 19 are the core elements of an acoustic transceiver 63. The acoustic transceiver 63 is furthermore connected to the microphone 13 picking up the acoustic signal and to the speaker 14 reproducing an acoustic signal. The controller 17 controls the operation of the acoustic transceiver 63. Fig. 4 illustrates the acoustic signaling link 40 between the acoustic transceivers 63 and 66.

When the user activates the app for authenticated pairing on the wireless computing device 20 (smartphone), the app activates the microphone and starts listening to the environment of the smartphone. The smartphone classifies the environment as some environments may have many spikes and fluctuations in noise level at the frequencies of the audio signaling. In challenging audio signaling environments, it is beneficial to increase the Signal-to-Noise Ratio to keep the Bit Error Rate (BER; the number of bit errors per time unit) low. Signal-to-noise ratio (SNR) is a measure that compares the level of a desired signal to the level of background noise and is defined as the ratio of signal power (meaningful information) and the power of background noise (unwanted signal). The app includes a look-up table from where it reads a predetermined Signal-to-Noise Ratio associated with the classified sound environment. During the exchange of secrets, the applied signal level is a compromise between signaling quality (low Bit Error Rate), and a short range for the acoustic signaling link. A limited range makes it easier for the user to authenticate the pairing by inspection. A limited range for the acoustic signaling link also provides a good privacy during the pairing process.

Referring to fig. 4, the hearing assistive devices 10 (also shown in detail in fig. 3 with focus on the audio transceiver) comprises the acoustic transceiver 63 embedded in the processor 12. In one embodiment, the processor 12 is a dedicated DSP processor unit. The hearing assistive devices 10 has a magnetic induction radio 52 for inter-ear communication. The hearing assistive devices 10 may in some embodiments (fig. 1) also have a Bluetooth radio 51 for direct communication with the wireless computing device 20, while the Bluetooth radio 51 is omitted in the embodiment shown in fig.2. The controller 17 controls the operation of the digital signal processing path 16 for alleviating a hearing loss by amplifying sound at frequencies in those parts of the audible frequency range where the user suffers a hearing deficit. The controller 17 also controls the operation of the acoustic transceiver 63, magnetic induction radio 52, and the Bluetooth radio 51. The controller 17 has a security manager unit 64 for handling secure communication, and a memory 11 (nonvolatile) for storing secret elements for the secure communication, including link keys for bonded Bluetooth connection.

The body worn relay device 30 receives a data signal from a hearing assistive device 10 via a short-range communication link 42 and relays the data signal via a short-range two-way communication link 44 towards the wireless computing device 20. In some embodiments, the short-range two-way communication link 42 is based upon the same protocol as the proprietary, magnetic induction communication link 43, whereby the same radio (magnetic induction radio 52) may be used.

In the embodiment illustrated in fig. 4, the body worn relay device 30 has a magnetic induction radio 34, a Bluetooth radio 32 and a processor 33 translating or converting data received in a first protocol into a second protocol before retransmitted. The body worn relay device 30 has an UI control 34, comprising one or more buttons, allowing the user to enter commands for controlling either the hearing assistive device 10, the body worn relay device 30 or the audio stream passing through the body worn relay device 30 via the short-range communication links 44 and 42.

The wireless computing device 20 may be a smartphone having a general-purpose processor 65 and a short-range radio 69. In some embodiments the short-range radio 69 is a Bluetooth Radio. An acoustic transceiver 66 adapted for two-way acoustic signaling is embodied as software code handled by general-purpose processor 65. The wireless computing device 20 also have a security manager 67 for handling secure communication and being embodied as software code handled by general-purpose processor 65 and a memory 68 for storing secret elements.

The wireless computing device 20 and the hearing assistive device 10 may communicate via a acoustic signaling link 40. The acoustic signaling link 40 may be a two-way link. The acoustic signaling link 40 may be frequency modulated by means of Frequency-Shift Keying (FSK) using a carrier signal above 8 kHz. By setting an appropriate volume for the audio transmitters (speakers), the sensitivity of the audio receivers (microphones) will allow a good bit-error rate when the wireless computing device 20 and the hearing assistive device 10 are within 10-20 centimeters, which is perfect for a user to visually inspect that no third-party devices are involved in the two-way acoustic signaling.

Furthermore, the wireless computing device 20 and the hearing assistive device 10 may communicate via the short-range communication link 41; either directly or via the body worn relay device 30 relaying signals. By setting up the short-range communication link 42 first, the acoustic signaling link 40 between the wireless computing device 20 and the hearing assistive device 10 can be used to authenticate the short-range communication link 44 between the wireless computing device 20 and the body worn relay device 30.

Prior to be able to communicate over a secure communication channel in Bluetooth, two devices need to be bonded. This is done in a pairing procedure, and once bonded, the devices will automatically reconnect when these are within range.

Device discovery in Bluetooth is the processes used to request and receive the identification address, name (Bluetooth Device Address), and services of other devices. The discovery process also involves exchange of cryptographic information. Devices are set up for communication with other devices, and a discoverable device is a communication device within range that will respond to an inquiry message. Normally a discoverable device may be available for discovery for a limited period, e.g. a predefined number of minutes after a hearing aid has been switched on.

According to the invention, the wireless computing device 20 and the hearing assistive device 10 are bonded according to a short-range radio communication protocol, e.g. Bluetooth version 2.1+, e.g. Bluetooth version 5, by initiating a paring session for the short-range radio communication protocol by bringing the wireless computing device and the hearing assistive device into pairing mode. The hearing assistive device 10 may in one embodiment enter the discovery state by switching on the hearing assistive device by closing a battery door. In another embodiment, the hearing assistive device 10 enters the discovery state by receiving a PAIR command from the wireless computing device 20 via the acoustic signaling link 40.

Once pairing has started, and the devices have verified that respective IO (Input-Output) capabilities supports out-of-band authentication, the wireless computing device 20 and the hearing assistive device 10 establish, as an out of band step, a two-way acoustic signaling link for exchanging secret elements. Hereafter, the exchanged secret elements are stored in the memories 68 and 11, respectively, and the wireless computing device 20 and the hearing assistive device 10 both calculates and stores in the memories 68 and 11 a unique link key for the bonding by using the exchanged secret elements.

During the pairing procedure between the wireless computing device 20 and the body worn relay device 30, the radio communication takes place between the Bluetooth radios and 32 and 69, while the out-of-band (the acoustic signaling link) communication is involving the security manager 64. The pairing is authenticated by the person managing the pairing as he controls the wireless computing device 20 and the hearing assistive device 10 and brings them into pairing mode and have them on his desk.

Fig. 5 shows schematically a wireless computing device 20 for use in a hearing system according to one embodiment of the invention. In some embodiment, the wireless computing device is a smartphone a tablet PC, a laptop or a Personal Computer (PC). In some embodiment, the wireless computing device is equipped with a touch sensitive display 21. According to one embodiment of the invention, an app is provided with a graphical design for assisted and authenticated pairing. When opening the app for assisted and authenticated pairing, the wireless computing device 20 has a graphical design being provided with a first part 22 of the display dedicated for carrying or hosting the hearing assistive device 10 during the pairing session. A second part 23 of the display 21 is dedicated for controlling the pairing session, and a third part 24 is dedicated for illustrating the status of the pairing session.

Touch displays of modern smartphone uses capacitive sensing based on capacitive coupling, that can detect and measure anything that is conductive or has a dielectric different from air.

According to one aspect of the invention, the wireless computing device 20 is adapted to detect a dielectric signature of the hearing assistive device 10 when placed on the first part 22 of the touch sensitive display 21 during the pairing session. This will add an extra dimension to the authentication of the pairing as the position and type of the hearing assistive device 10 can be detected.

Only one side of the touch display insulator is coated with conductive mesh material. A small voltage is applied to this layer, resulting in a uniform electrostatic field. When a conductive or a dielectric object, such as a human finger or a hearing assistive device 10, approaches the uncoated display surface, a capacitor is dynamically formed. The general-purpose processor 65, acting as sensor controller for the touch sensitive display 21, can determine the location of the object, the size and speed of the object, and hereby its dielectric signature.

### The pairing procedure

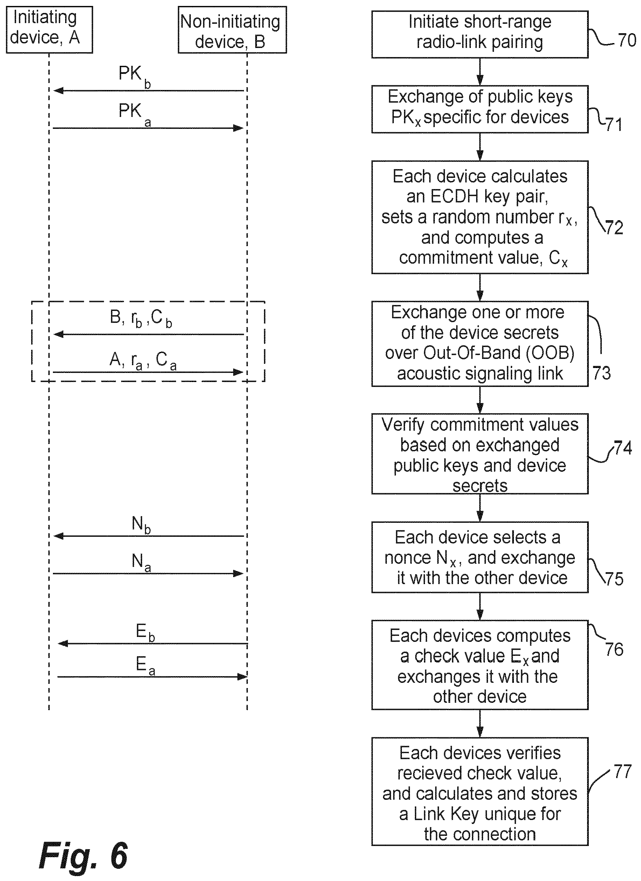

Fig. 6 illustrates the pairing process between the wireless computing device 20 and the hearing assistive device 10. Pairing is initiated by bringing an initiating device A and a non-initiating device B into discovery states in step 70. When the initiating device A and the non-initiating device B have discovered each other, the pairing is in step 71 initiated by the initiating device A sending its public key, PKₐ, to the non-initiating device B (receiving). The non-initiating device B replies with its own public key PK_{b}. These public keys are not regarded as secrets although they may identify the devices sending them. The public keys, PKₐ and PK_{b}, are exchanged between the initiating device A and the non-initiating device B.in step 72, both the initiating device A and the non-initiating device B generate its own Elliptic Curve Diffie-Hellman (ECDH) public-private key pair, DHKey, based upon the received public key, PKₐ or PK_{b}, whereby a shared secret has been established over an insecure channel. This key pair may be computed prior to pairing.

Further in step 72, both the initiating device A and the non-initiating device B sets a random number, rₓ, unique for itself, while a random number for the other device is unknown and as a default set to be 0. Both the initiating device A and the non-initiating device B computes a Commitment Value, Cₓ based on the exchanged public keys, PKₐ or PK_{b} and the generated random numbers, rₓ, entered into a predetermined cryptographic function.

In step 73, the initiating device A and the non-initiating device B exchange device secrets over an authenticatable, acoustic signaling link 40. The exchanged device specific secrets may include the random number, rₓ, and Commitment Value, Cₓ, both set in step 72. The random number, rₓ, is secret unique for the for the ongoing pairing session. In some embodiment, the exchanged device specific secrets include the Bluetooth address A, B of the sending device. The Commitment Values are calculated as follows:

Cₐ = f1(PKₐ, PK_{b}, Nₐ, N_{b})

C_{b} = f1(PK_{b}, PKₐ, N_{b}, Nₐ)

- where rₓ (random value) from device X,
- PKₓ is a Public Key of device X set and exchanged in step 71,
- f1 is a cryptographic function used to generate the 128-bit commitment values Cₐ and C_{b}.

The user authenticates the pairing process by using the acoustic signaling link 40 for exchanging the device specific secrets, by placing a hearing assistive device 10 next to or adjacent to a computer tablet device or a smartphone, and then start the pairing procedure from the computer tablet device or the smartphone. By using an appropriate acoustic signaling protocol, the user may reduce the range for a man-in-the-middle to operate from 10-20 meters to less than 10-20 centimeters. Hereby the user has full control over devices being part of the pairing process.

Both the initiating device A and the non-initiating device B transmit and/or receive data over an out-of-band channel provided by the authenticatable, acoustic signaling link 40 in step 73. The user visually verifies the identity of the wireless computing device 20 and the hearing assistive device 10. The authentication according to the applied communication protocol will be based on set, calculated and exchanged device secrets. The device secrets may include some or all of the computed and exchanged commitment values, Cₐ and C_{b}, the set and exchanged random number r_{A} and r_{B}, and the unique and exchanged Bluetooth address, A and B, for the two devices.

In step 74, both the initiating device A and the non-initiating device B holds public keys PKₐ and PK_{b}, and random numbers, rₐ and r_{b}, whereby the non-initiating device B computes the commitment values Cₐ and compares the result with the commitment values Cₐ received from the initiating device A. Like this the initiating device A computes C_{b} and compares the result with the commitment values C_{b} received from the non-initiating device B. If the computed and received commitment values Cₐ and C_{b} does not match, the process will be aborted by the device detecting the mismatch.

The protocol is symmetric with respect to the initiating device A and the non-initiating device B. It does not require that wireless computing device 20 always will initiate pairing, but in practice the hearing assistive device 10 will in most cases be a hearing aid with limited user-interface, and consequently often will act as non-initiating device in the process.

In step 75, both the initiating device A and the non-initiating device B generates a nonce, Nₓ (unique random value from device X), being random number, used only once, and then discarded. The two nonces, Nₐ and N_{b} are exchanged between the initiating device A and the non-initiating device B. In some embodiments, the nonces, Nₐ and N_{b} are sent via a Bluetooth channel.

In step 76, the initiating device A and the non-initiating device B computes a check value, Eₓ, for itself. The check values, Eₓ are calculated as follows:

Eₐ = f3(DHKey, Nₐ, N_{b}, r_{a,} B, A)

E_{b} = f3(DHKey, N_{b}, Nₐ, r_{b}, A, B)

- where DHKey is the Elliptic Curve Diffie-Hellman (ECDH) public-private key pair calculated in step 72,
- Nₐ and N_{b} are the nonces selected and exchanged in step 75,
- rₐ and r_{b} are random values set in step 73,
- A and B are the Bluetooth address of the initiating device A and the non-initiating device B exchanged in step 73, and
- f3 is a cryptographic function used to compute check values Eₐ and E_{b} in the second authentication Stage.

The second stage of authentication confirms that both devices have successfully completed the exchange. Each device computes a new check value Eₐ and E_{b} that includes the previously exchanged values and the newly derived shared key (DHKey). Then the initiating device A and the non-initiating device B exchange check value Eₐ and E_{b} in step 76 and verifies in step 77 the validity of the calculated and received check values Eₐ and E_{b}. If the check fails at one of the devices, it indicates to the device that pairing has not been confirmed, and that the process must be aborted.

In case the check values Eₐ and E_{b} are verified in step 77, the initiating device A and the non-initiating device B completes the pairing procedure by calculating a Link Key unique for the connection from the derived shared key and the publicly exchanged data. Both parties compute the Link Key by means of a cryptographic function from the calculated and received DHKey, random nonces, and Bluetooth Addresses. The nonces ensure the freshness of the key even if long-term ECDH values are used by both sides. This Link Key is used for bonding the initiating device A and the non-initiating device B. The final phase in Pairing procedure is generating appropriate encryption keys.

By pairing the initiating device A and the non-initiating device B, these becomes bonded and will have Link Keys stored. When the Link Keys are maintained, the bonding will exist and, the initiating device A and the non-initiating device B will automatically reconnect when these are within range.

According to the invention authenticated pairing is applicable for pairing the wireless computing device 20 and the hearing assistive device 10, when a smart phone acts as remote control for a set of hearing aids. The invention is also very useful when a remotely based audiologist or hearing care professional needs to assist a patient via the Internet using the wireless computing device 20 as gateway. Then the audiologist or hearing care professional can read from and write to the hearing assistive device 10 via an authenticated communication link and adjust some settings.

The invention is also applicable in a fitting session where several audiologists or hearing care professionals often shared the same clinic. By using a two-way acoustic signaling link in the authentication procedure, the audiologist does not have to check ID of the hearing aid, once the correct hearing aid is placed correct relatively to the wireless computing device 20. The same applies when the audiologist or hearing care professional intends to up- or down-grade a set of hearing aids - either in a face to face session in a hearing health clinic or remotely over the Internet using the wireless computing device 20 as gateway.

The Bluetooth standard basically specifies three different basic security services. The first one is Authentication; the identity of communicating devices is verified based on their Bluetooth device address. Bluetooth does not provide native user authentication. The second one is Confidentiality; the information is prevented from compromising caused by eavesdropping by ensuring that only authorized devices can access and view transmitted data. The last one is Authorization: checking that a device is authorized to use a service before permitted to use it.

A key is a piece of information (a parameter) that determines the functional output of a cryptographic algorithm, and specifies the transformation of plaintext into ciphertext, and vice versa for decryption algorithms. Currently, 128-bit keys are commonly used and considered very strong.

According to the Bluetooth specification, a device shall enter inquiry sub-state in order to discover other devices. In this sub-state, it shall repeatedly transmit the inquiry message at different hop frequencies. A device allowing itself to be discovered, shall regularly enter the inquiry scan sub-state to respond to inquiry messages.

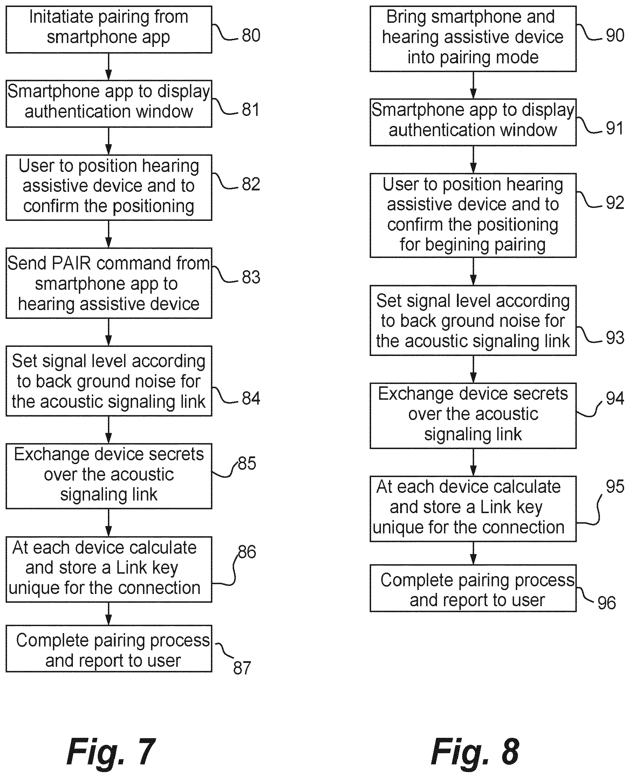

Fig. 7 illustrates one authenticated bonding procedure according to the invention. The user of the hearing assisting device 10 initiates the pairing from the pairing app of his wireless computing device 20 (smartphone), whereby the acoustic transceiver 66 outputs a PAIR command. When the hearing assisting device 10 receives the PAIR command, it activates its Bluetooth radio 15 and becomes discoverable in step 80.

During the discovery, the wireless computing device 20 starts in step 81 to display the graphical design for assisted and authenticated pairing earlier discussed with reference to fig. 5. The graphical design for assisted and authenticated pairing invites the user to place the wireless computing device 20 on a flat surface with the touch sensitive display 21 upwards. The graphical design for assisted and authenticated pairing invites the user to place the hearing assisting device 10 on the first part 22 of the display. In step 82, the user places the hearing assisting device 10 on the first part 22 and confirms that the hearing assisting device 10 is correct positioned by touching the second part 23 of the display 21. Then the wireless computing device 20 in step 84 starts setting the volume for the acoustic signaling link to an appropriate power level ensuring that the hearing assisting device 10 exhibits a low Bit Error Rate when receiving and detecting the audio signal, and that the limited range of the audio signal enables the user to authenticate the pairing by inspection.

In step 85, the wireless computing device 20 and the hearing assisting device 10 starts exchanging device secrets over the acoustic signaling link 40. The exchange of device secrets over the acoustic signaling link 40 corresponds to the Out-Of-Band (OOB) exchange of device secret in step 73 in fig. 6.

In step 86, the wireless computing device 20 and the hearing assisting device 10 calculates and stores a link key unique for the bonding between the two devices by using the secret elements exchanged via the acoustic signaling link 40, and possibly also via the radio connection during the discovery phase. When pairing has been completed successfully, the smartphone app prompts in third part 24 of the graphical design that pairing has been successful and that the hearing assisting device 10 may be removed.

Fig. 8 illustrates an alternative procedure for authenticated bonding according to the invention. The user of the hearing assisting device 10 initiates the pairing by switching on the hearing assisting device 10 by closing the battery door. Then the hearing assisting device 10 becomes discoverable for e.g. 3 minutes in step 90. By activating the pairing app of his wireless computing device 20, the touch sensitive display 21 starts in step 91 to display the graphical design for assisted and authenticated pairing.

In step 92, the user places the hearing assisting device 10 on the first part 22 and confirms that the hearing assisting device 10 is correct positioned by touching the second part 23 of the display 21. Then the wireless computing device 20 in step 93 sets the volume for the acoustic signaling link to ensure privacy during the exchange of device secrets, which takes place as an Out-Of-Band (OOB) exchange in step 94.

In step 95, the wireless computing device 20 and the hearing assisting device 10 calculates and stores a link key unique for the bonding between the two devices by using the secret elements exchanged via the acoustic signaling link 40. When pairing has been completed successfully in step 96, the smartphone app prompts in third part 24 of the graphical design that pairing has been successful and that the hearing assisting device 10 may be removed.

In some embodiments, the established acoustic signaling link between the wireless computing device 20 and the hearing assistive device 10 is used for exchanging secret elements used for number comparison. Then the wireless computing device 20 and the hearing assistive device 10 each calculate a number, e.g. a four- or six-digit number, by means of security algorithms embedded in the respective device. The hearing assistive device 10 then outputs the calculated a number via the acoustic signaling link, and when the wireless computing device 20 via its microphone receives the number output by the hearing assistive device 10, the wireless computing device 20 compares the received the number with the number calculated by itself. When the two numbers are matching, the pairing process is deemed to be authenticated due to the short range of the acoustic signaling link. Otherwise the wireless computing device 20 interrupts the pairing process and notifies on the screen the user about the failure. When the pairing process is deemed to be authenticated, the wireless computing device 20 and the hearing assistive device 10 exchanges the required security elements via the radio connection, calculates and stores a link key unique for the bonding of the two devices.

## Claims

1. A method for authenticating a bonding procedure according to a short-range radio communication protocol between a wireless computing device and a hearing assistive device, and comprising steps of:
- initiating a paring session for the short-range radio communication protocol by bringing the wireless computing device and the hearing assistive device into pairing mode;
- arranging the hearing assistive device in a predefined position relatively to the wireless computing device;
- establishing an acoustic signaling link between the wireless computing device and the hearing assistive device for exchanging secret elements as an out-of-band step of the pairing session; and
- calculating and storing a link key unique for the bonding of the wireless computing device and the hearing assistive device by using the exchanged secret elements.

2. The method according to claim 1, wherein the establishing of the acoustic signaling link includes providing a two-way acoustic signaling path between the wireless computing device and the hearing assistive device.

3. The method according to claim 1, wherein the arranging of the hearing assistive device in the predefined position includes placing the hearing assistive device on a touch sensitive display of the wireless computing device,

4. The method according to claim 1, wherein the entering of the discovery state of the hearing assistive device is triggered by one of the following actions:
- switching on the hearing assistive device by closing the battery door, or
- receiving a PAIR command from the wireless computing device via the acoustic signaling link.

5. A hearing assistive system including a wireless computing device (20) and a hearing assistive device (10) being adapted for authenticating bonding between a wireless computing device (20) and a hearing assistive device (10) according to a short-range radio communication protocol;
- wherein the hearing assistive device (10) comprises:
∘ an acoustic transceiver (66) adapted for acoustic signaling;
∘ a memory (11) for storing secret elements;
∘ a short-range radio (51); and
∘ a security manager unit (64) for handling secure communication;
- wherein the wireless computing device (20) comprises:
∘ an acoustic transceiver (63) adapted for acoustic signaling;
∘ a memory (68) for storing secret elements;
∘ a short-range radio (69); and
∘ a security manager unit (67) for handling secure communication;
- wherein a paring session for the short-range radio communication protocol includes:
∘ bringing the wireless computing device (20) and the hearing assistive device (10) into pairing mode;
∘ arranging the hearing assistive device (10) in a predefined position relatively to the wireless computing device (20);
∘ establishing, as an out of band step of the pairing session, an acoustic signaling link (40) between the acoustic transceivers (63, 66) for exchanging secret elements; and
∘ calculating a unique link key for the bonding of the wireless computing device (20) and the hearing assistive device (10) by using the exchanged secret elements and storing the unique link key in the memories (11, 68).

6. The hearing assistive system according to claim 5, wherein the wireless computing device (20) is a smartphone or a tablet PC comprising a touch sensitive display (21) having a first part (22) dedicated for hosting the hearing assistive device (10) during the pairing session.

7. The hearing assistive system according to claim 6, wherein the touch sensitive display (21) furthermore has a second part (23) dedicated for user interaction during the pairing session, and a third part (24) dedicated for presenting the status of the pairing session.

8. The hearing assistive system according to claim 5, wherein the wireless computing device (20) is adapted to detect a dielectric signature of the hearing assistive device (10) when placed on the first part (22) of the touch sensitive display (21) during the pairing session.

9. The hearing assistive system according to claim 5, wherein the acoustic signaling link (40) is adapted for providing a two-way acoustic signaling path between the wireless computing device (20) and the hearing assistive device (10).

10. The hearing assistive system according to claim 5, wherein the wireless computing device (20) is a smartphone; wherein the hearing assistive device (10) is provided with an acoustic transceiver (63) integrated in a processor (12); and wherein the smartphone (20) is provided with the acoustic transceiver (66) embodied as software code handled by general-purpose processor (65).

11. The hearing assistive system according to claim 5, wherein hearing assistive device (10) is adapted to enter pairing mode via a discovery state triggered by one of the following actions:
- switching on the hearing assistive device by closing the battery door, or
- receiving a PAIR command from the wireless computing device via the acoustic signaling link.

12. A wireless computing device being adapted for authenticating bonding according to a short-range radio communication protocol to a hearing assistive device (10), and comprising:
- a short-range radio (69) adapted for automatically re-connecting to a hearing assistive device (10) once bonded;
- an acoustic transceiver (63) adapted for providing an acoustic signaling link (40) for exchanging secret elements, as an out of band step of the pairing session;
- a security manager unit (67) for handling a pairing session for generating a unique link key for a bonded connection to the hearing assistive device (10);
- a memory (68) for the unique link key calculated for the bonded connection; and wherein the wireless computing device further comprises a touch sensitive display (21) having a first part (22) dedicated for carrying the hearing assistive device (10) during the pairing session.

13. The wireless computing device according to claim 12, wherein the touch sensitive display (21) furthermore comprises a second part (23) dedicated for user interaction during the pairing session, and a third part (24) dedicated for illustrating the status of the pairing session.

14. The wireless computing device according to claim 12, wherein a sensor controller is adapted to detect a dielectric signature of the hearing assistive device (10) when placed on the first part (22) of the touch sensitive display (21) during the pairing session.

15. The wireless computing device according to claim 12 and being adapted to trigger pairing mode of the hearing assistive device (10) by sending a PAIR command via the acoustic signaling link.
